# EUROPEAN PATENT APPLICATION

(11) **EP 3 914 042 A1**
(43) Date of publication of application: **24.11.2021**
(21) Application number: 20175672.3
(22) Date of filing: 20.05.2020
(51) Int. Cl.: H05B 6/06, H05B 6/12, A47J 27/00

(54) **COOKING DEVICE, COOKWARE AND RELATED METHODS**

(71) Applicant: Infineon Technologies Austria AG, 9500 Villach (AT)
(72) Inventor: HOPFGARTNER, Herbert, 9701 Rothenthurn (AT); PACHLER, Walther, 8053 GRAZ (AT); SERRANO GÓMEZ, Juan Ángel, 8044 Graz (AT); WITSCHNIG, Harald, 9241 Wernberg (AT)
(74) Representative: Sticht, Andreas

(57) **Abstract**

A cooking device (10) is provided, which comprises a wireless communication device (12) that is configured to communication with cookware (11) provided on the cooking plate (15).

## Description

### TECHNICAL FIELD

The present application relates to cooking devices, cookware and related methods.

### BACKGROUND

For cooking hot food, usually some kind of cookware like a pot or a pan is placed on a cooking plate of a cooking device like a tabletop cooker or a multi-hob stove. One kind of cooking device is an induction cooking device, which generates a varying magnetic field to induce eddy currents in the cookware. The eddy currents flow through the electrical resistance of the cookware, thereby heating the cookware via Joule heating. For such induction cooking devices, it is necessary or at least desirable to determine if cookware is present on the cooking plate when a user turns on the cooking device.

To achieve this, in conventional solutions a current pulse is applied to a coil in the induction cooking device. The cookware (if present), the inductive coil and a resonant capacitor coupled to the coil form a resonance circuit. This current pulse causes a current and a resonance oscillation. If cookware is present, the current is lower and the resonance oscillation is dampened quickly due to the resistance of the cookware. If cookware is not present, the resonance oscillation decays significantly more slowly. In addition to detecting the presence of cookware, the conventional solutions may also determine the type of cookware based on how quickly the resonance oscillation is dampened. Therefore, by measuring the decay time, amplitude or both of the oscillations presence of cookware may be detected. Various resonance topologies may be used for forming the resonance circuit. For example, in table top cookers typically single-ended parallel resonance topologies (SEPR) are used whereas multi-hob stoves typically use a half-bridge series resonance topology (HBSR).

Applying such test pulses causes stress for electrical components used in the cooking device, as a high energy resulting from the pulse needs to be dissipated. Such electrical components may include transistors like insulated gate bipolar transistors (IGBTs) used for switching the current in the coil.

Moreover, control algorithms for controlling the power supplied to a cooking plate cannot be optimized for current cooking devices, as there are many different types and designs of cookware, and it may be hard to regulate the cooking temperature precisely.

### SUMMARY

A cooking device as defined in claim 1 and a cookware as defined in claim 11 are provided. The dependent claims define further embodiments.

According to an embodiment, a cooking device is provided, comprising:
an induction cooking plate, and
a wireless communication device associated with the cooking plate and configured to communicate with cookware provided on the cooking plate, wherein the wireless communication device is configured to use an induction coil of the induction cooking plate as antenna.

According to a further embodiment, a cookware for induction cooking is provided, comprising:
a wireless communication device configured to communicate with a cooking device, wherein the wireless communication device is configured to be powered by signals received from the cooking device.

The above summary is merely intended to give a brief overview over some embodiments and is not to be construed as limiting in any way.

### BRIEF DESCRIPTION OF THE DRAWINGS

Fig. 1 is a block diagram of a system including a cooking device and a cookware according to embodiments.
Fig. 2 is a flowchart illustrating a method according to an embodiment.
Fig. 3 is a perspective view illustrating a system including a cooking device and a cookware according to an embodiment.
Fig. 4 is a diagram illustrating signal timing according to some embodiments.
Figs. 5A, 5B and 5C illustrate example signals for some embodiments.
Fig. 6A illustrates a pot according to an embodiment.
Fig. 6B shows a magnified view of an area 62 of the pot of Fig. 6A.
Fig. 7 shows a schematic cross-sectional view of parts of a system according to an embodiment.

### DETAILED DESCRIPTION

In the following, various embodiments will be described in detail referring to the attached drawings. These embodiments are given by way of example only and are not to be construed as limiting in any way. For example, while in many embodiments induction cooking devices will be used as an example, techniques described herein may also be applied to other cooking devices.

Furthermore, apart from features and details specifically described, other features or details, for example features used in conventional cooking devices like conventional induction cooking devices and corresponding cookware may be employed.

Features from different embodiments may be combined unless noted otherwise. Variations, modifications or details described with respect to one of the embodiments may also be applied to other embodiments and will therefore not be described repeatedly.

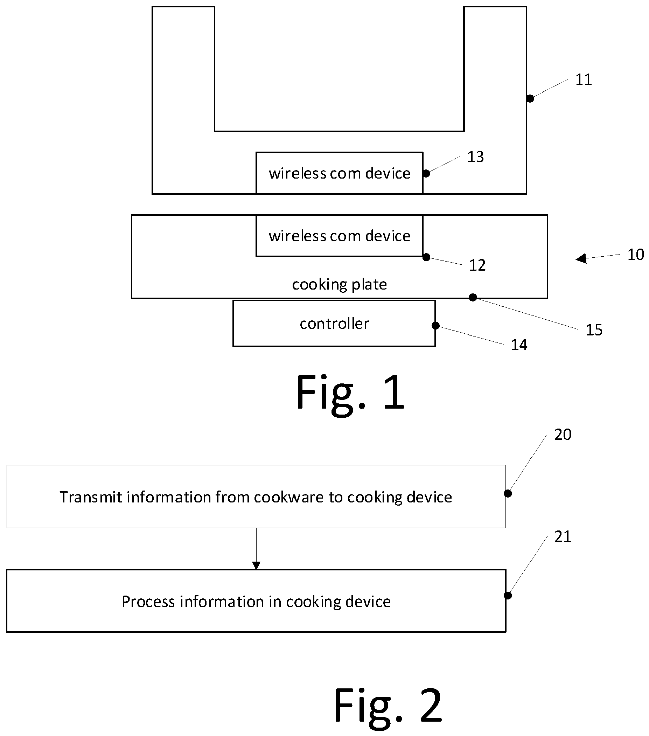

Fig. 1 illustrates a system including a cooking device 10 according to an embodiment and a cookware 11 according to an embodiment. A cooking device as used herein refers to a device comprising one or more cooking plates which may be used to heat cookware. In the embodiment of Fig. 1, cooking device 10 comprises a single cooking plate 15. In other embodiments, cooking device 10 may be a multi-hob stove having a plurality of cooking plates, for example four cooking plates. In this case, each of the cooking plates may be operated as explained for cooking plate 15 below. In this case, some elements like a controller described below or transmit/receive circuitry may be common for all cooking plates, with a separate antenna for each cooking plate. In other embodiments, some cooking plates may be implemented using techniques as discussed herein, and other cooking plates may be implemented in a conventional manner. In some embodiments, cooking plate 15 may be an induction cooking plate.

Cooking plate 15 is controlled by a controller 14. For example, controller 14 may supply current to cooking plate 15 to obtain heating of cookware 11. Apart from the employment of wireless communication devices as explained below, controller 14 may be implemented as in conventional cooking devices. The term "controller" is not to be construed as being limited to a single device. For example, controller 14 may comprise a first subcontroller controlling cooking plate 15 and a second subcontroller for the wireless communication described below, the first and second subcontrollers communicating with each other.

Cookware 11 may be any suitable cookware that may be placed on a cooking plate to be heated like a pot, a pan, a casserole or the like. In case cooking plate 15 is an induction cooking plate, cookware 11 may be a cookware for induction cooking.

Cooking device 10 comprises a wireless communication device 12, which in the embodiment of Fig. 1 is arranged in cooking plate 10. Likewise, cookware 11 comprises a wireless communication device 13, which in the embodiment of Fig. 1 is embedded in a bottom of cookware 11, such that wireless communication devices 12 and 13 are arranged close to each other when cookware 11 is set on cooking plate 15.

In some embodiments, wireless communication devices 12, 13 may be near field communication (NFC) devices. In some embodiments, wireless communication device 13 may not include its own power source, but may be powered by cooking device 11 using electromagnetic radiation, for example be implemented as radio frequency identification (RFID) tag or including one. Other types of wireless communication devices may also be used.

Wireless communication devices 12, 13 may be used to provide information from cookware 11 to cooking device 10. This information may then be processed in cooking device 10 and may for example be used to control cooking, for example by controlling power supplied to cooking plate 15. This will be further illustrated referring to Fig. 2, which shows a flowchart illustrating a method according to an embodiment.

The method of Fig. 2 may be implemented in the system of Fig. 1 or in any of the systems, cooking devices and cookware described further below. For illustration, the method will be explained referring to Fig. 1. However, it is to be understood that the method may also be implemented in other systems, cooking devices and cookware than the ones explicitly shown and described herein.

At 20, the method comprises transmitting information from a cookware to a cooking device using wireless communication, for example wireless communication devices 12, 13 of Fig. 1. It should be noted that the transmitting of information in some implementations may be made on request from the cooking device. In this case, for example in Fig. 1, controller 14 may cause wireless communication device 12 to transmit a signal to wireless communication device 13. As mentioned above, in some implementations, this signal may also provide wireless communication device 13 with power. In response to this signal, wireless communication device 13 transmits information to wireless communication device 12.

At 21, the method of Fig. 2 then comprises processing the information in the cooking device, for example in controller 14 of Fig. 1. In some implementations, processing the information may comprise controlling the cooking plate, for example power supplied thereto, on the basis of the information.

In a simple case, the information indicates presence of cookware like cookware 11 on a cooking plate like cooking plate 15. In other words, in this simple case, the cooking device transmits a signal, and if a response is received, the cooking device knows that cookware is present. If no signal is received, the cooking device assumes that no cookware is present. In other embodiments, if no response is received, in case of an induction cooking device for backward compatibility with cookware not including a wireless communication device, the cooking device may apply a current pulse to an induction coil of a cooking plate, to detect presence of cookware in the conventional manner discussed in the background section. If no cookware is found to be present, in some embodiments no power is supplied to a cooking plate like cooking plate 15. In other words, cooking is only enabled if the information indicates that cookware is present on the cooking plate.

In another embodiment, additionally or alternatively the information may comprise an indication of a type of cookware. For example, the information may indicate if the cookware is a pot or a pan, may indicate a size of the cookware (large pan, large pot, small pot, small pan), or may even give more detailed information about the cookware like wall thickness, manufacturer, etc. Also in this case, the cooking plate may be controlled based on the information. For example, only certain types of cookware may be allowed by a manufacturer of the cooking device to be used (for example only cookware from specific manufacturers), or the power supplied may be controlled based on the size of the cookware (for example more power for larger size cookware with the same settings).

In some embodiments, the cookware may also include a temperature sensor, and the information may include an indication of the temperature. For example, in this way, the cooking plate may be controlled such that a predefined temperature profile is obtained over time. In case of a steak frying in a pan, first a high temperature may be used for a short period of time and then a lower temperature for a longer period of time. In other cases, a certain temperature (for example boiling temperature of 100°C) may be maintained for a predefined time. In such a way, cooking may be at least partially automated.

In other embodiments, additionally or alternatively, such a temperature indication may be used to implement a safety feature. For example, the cooking plate may be turned off if a very high temperature is maintained for longer than a predefined time, for example 10 minutes. Instead of turning off the cooking plate, also first a message may be output to a user requiring confirmation that the high temperature is intentional, and if no such confirmation is received, the cooking plate may be turned off. Other safety conditions than a temperature threshold may also be used. For example, a temperature increase above a predefined increase threshold for more than a predefined time period may indicate a problematic condition, and then power supplied to the cooking plate may be interrupted or a user confirmation may be demanded, as explained above.

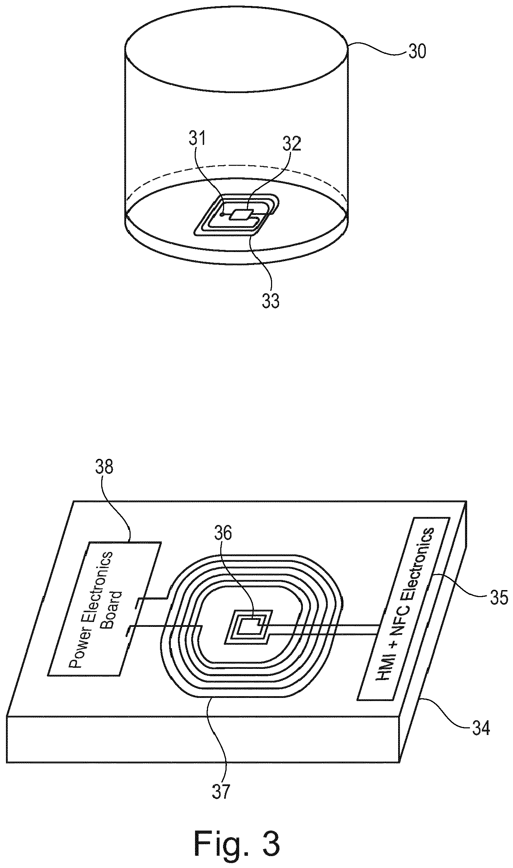

Fig. 3 illustrates a system according to a further embodiment. The system of Fig. 3 comprises a cookware 30 in the form of a pot and a cooking device 34. In the system of Fig. 3, the cooking device is an induction cooking device comprising an induction coil 37. Induction coil 37 is powered by a power electronics board 38, as in any conventional induction cooking device. Within induction coil 37, a near field communication transceiver antenna 36, also in the form of a coil, is provided, coupled to human machine interface (HMI) and near field communication (NFC) electronics 35. Human machine interface relates to communication with a user of the cooking device which may be implemented in any conventional manner known for cooking devices. Electronics 35 may control power electronics board 38 for supplying induction coil 37 with power.

Cookware 30 comprises a near field communication antenna 33, a near field communication integrated circuit (NFC-IC) 32 and a temperature sensor 31. By sending near field communication signals via antennas 36, 33, a communication as explained above with reference to Fig. 2 may be effected between electronics 35 and near field communication integrated circuit 32, including the communication of a temperature indication of a temperature measured by temperature sensor 31.

Use of such a temperature sensor also makes conventional solutions like a separate temperature sensor device which is put in the cookware superfluous.

While in Fig. 3, an induction coil 37 separate from near field communication antenna 36 is shown, in other embodiments, the induction coil like induction coil 37 may additionally serve as near field communication antenna or other antenna of a wireless communication device, such that no separate antenna may have to be provided in such embodiments. In this case, electronics 35 are coupled to induction coil 37, and antenna 36 is omitted.

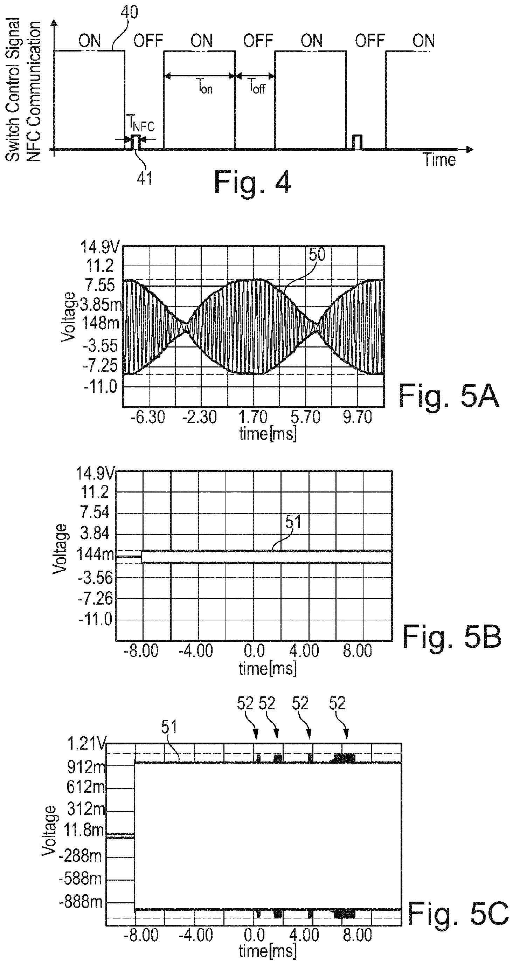

In typical implementations, the signal emitted from induction coil 37 for inductive heating may be significantly stronger than the one used for near field communication (for example, depending on implementation, 5 to 20 times stronger), such that in some implementations, sending both signals at the same time may lead to a very high noise background (by the induction heating) for the near field communication signal. In some embodiments, the near field communication signals may be sent at times where no current is supplied to induction coil 37. This will be explained referring to Fig. 4.

In Fig. 4, a curve 40 shows a switch control signal 40 controlling switches for example of power electronics board 38 to supply induction coil 37 with power. As can be seen, between periods Tₒₙ where the switches are turned on and power is supplied to the induction coil, there are periods T_{off} where no power is supplied. In embodiments, these periods T_{off} are used for a near field communication signal 41. In this way, there is no conflict between the signals. Typically, a near field communication has a duration of 100 ms or less, so that not much time is required for near field communication.

It should be noted that in case full heating power is provided to cookware, T_{off} in conventional cooking devices may be at 0. However, as the time T_{NFC} for near field communication is short, even then short periods T_{off} allowing near field communication may be inserted without losing significant power. For example, if near field communication (for example for temperature measurement purposes) takes place about every 5 s, this would mean a loss of only 2 % heating power at full power and no loss for lower power settings, as for lower power settings, pauses are provided anyway. This may also be used in case a cooking device does not use current pulses, but a constant current supply for heating (for example different current levels for different amounts of heating). In this case, the heating current may be interrupted by short periods T_{off} during which near field communication is performed.

To further illustrate this, Fig. 5A shows an induction cooking signal 50 (voltage applied to an induction coil), and Fig. 5B shows an NFC signal 51 on the same voltage scale as Fig. 5A. Fig. 5C shows NFC signal 51 of Fig. 5B with an enlarged voltage scale, where arrows 52 mark instants where NFC communication occurs. As can be seen, the amplitude of the NFC signal 51 is significantly lower than the amplitude of induction cooking signal 50. Therefore, providing NFC communication in periods where no induction cooking signal is applied, as explained above may help to ensure correct NFC communication.

It should be noted that the voltage scales shown in Figs. 5A to 5C are merely used as an example to illustrate the different levels of the amplitudes of the induction cooking signal and the NFC signal. The voltage scales should not be construed to limit the invention to the exact voltage levels shown in Figs. 5a to 5C.

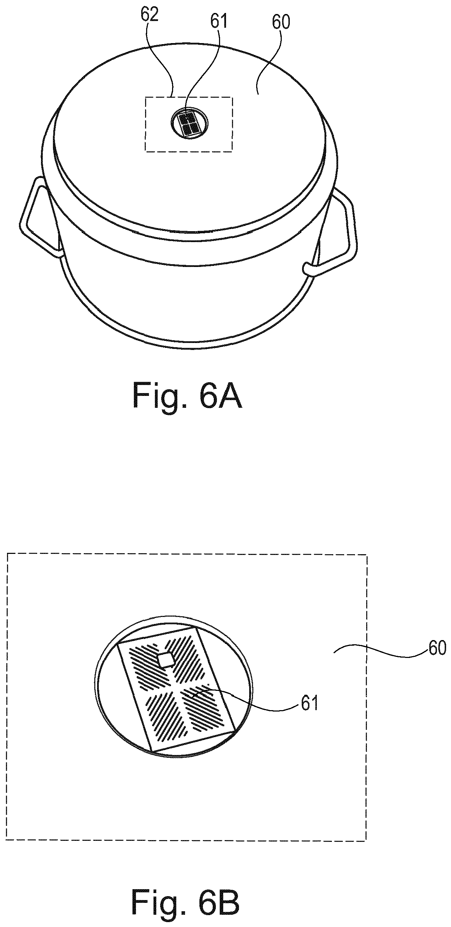

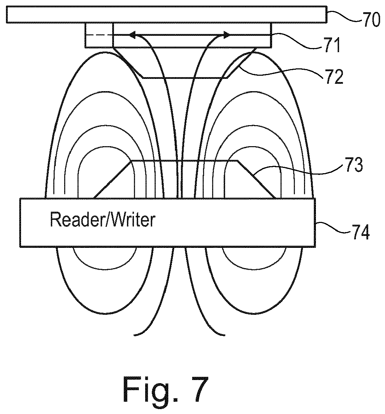

In a cookware, a wireless communication device may be installed in a recess in a bottom of the cookware. This is shown in Fig. 6A and 6B for a pot 60 where Fig. 6B is an enlarged view of an area 62 of Fig. 6A. An NFC tag 61 including an antenna and an NFC chip is provided in a milled recess in the bottom of pot 60. In some embodiments, between tag 61 and pot 60, a ferrite shield may be provided to provide shielding between the metal of pot 60 and tag 61. Use of such a ferrite shielding is further illustrated referring to Fig. 7.

Fig. 7 illustrates a schematic cross-sectional view of a cookware of a system according to an embodiment. On a side of a cookware, of which a metallic bottom 70 is shown, a wireless communication device (for example NFC tag) 72 is provided, and on the side of a cooking device, a wireless communication device 73 coupled with reading/writing circuitry 74 (for example antenna 36 coupled with electronics 35 of Fig. 3) is provided. A ferrite sheet 71 is provided between wireless communication device 72 and the metallic bottom 70 of the cookware to shield the wireless communication device 72 from the metal surface of bottom 70. As schematically shown, magnetic flux lines penetrate through ferrite shield 71. In some implementation, another ferrite sheet (not shown in Fig. 7) may be provided between wireless communication device 73 and reading/writing circuitry 74 for shielding on the side of the cookware.

Some embodiments are provided by the following examples:
Example 1. A cooking device, comprising:
   a cooking plate, and
   a wireless communication device associated with the cooking plate and configured to communicate with cookware provided on the cooking plate.
Example 2. The cooking device of example 1, wherein the cooking plate is an induction cooking plate.
Example 3. The cooking device of example 2, wherein the wireless communication device is configured to use an induction coil of the induction cooking plate as antenna.
Example 4. The cooking device of example 1 or 2, wherein the wireless communication device comprises an antenna coil provided in the cooking plate.
Example 5. The cooking device of any one of examples 1 to 4, wherein the wireless communication device comprises a near field communication, NFC, device.
Example 6. The cooking device of any one of examples 1 to 5, wherein the wireless communication device comprises a radio frequency identification, RFID, reader device.
Example 7. The cooking device of any one of examples 1 to 6, further comprising a controller configured to control at least one of the wireless communication device and the cooking plate.
Example 8. The cooking device of example 7, wherein the controller is configured to activate the cooking plate only if it receives a signal from the wireless communication device indicating presence of cookware on the cooking plate.
Example 9. The cooking device of example 7 or 8, wherein the wireless communication device is configured to receive a signal indicating a type of cookware from the cookware, and wherein the controller is configured to control the cooking plate based on the type of cookware.
Example 10. The cooking device of any one of examples 7 to 9, wherein the wireless communication device is configured to receive a temperature indication from the cookware, and wherein the controller is configured to control the cooking plate based on the temperature indication.
Example 11. The cooking device of example 10, wherein the controller is configured to control the cooking plate based on the temperature indication and a give temperature profile.
Example 12. The cooking device of example 10 or 11, wherein the controller is configured to deactivate the cooking plate if the temperature indication fulfills a predefined safety condition.
Example 13. The cooking device of example 12, wherein the predefined safety condition comprises one or more of:
   - a temperature being above a predefined temperature threshold for more than a predefined first time period, or
   - a temperature increase above a predefined increase threshold for more than a predefined second time period.
Example 14. The cooking device of any one of examples 1 to 13, wherein the wireless communication device is configured to communicate in time periods where no
   power is provided to the cooking plate.
Example 15. A cookware, comprising:
   a wireless communication device configured to communicate with a cooking device.
Example 16. The cookware of example 15, wherein the wireless communication device is configured to be powered by signals received from the cooking device.
Example 17. The cookware of example 16, wherein the wireless communication device comprises a radio frequency identification, RFID, tag.
Example 18. The cookware of any one of examples 15 to 17, wherein the wireless communication device comprises a near field communication, NFC, device.
Example 19. The cookware of any one of examples 15 to 18, wherein the wireless communication device is provided in a bottom of the cookware.
Example 20. The cookware of any one of examples 15 to 19, wherein the cookware comprises a metal, and wherein the wireless communication device is shielded against the metal by a ferrite material.
Example 21. The cookware of any one of examples 15 to 20, wherein the wireless communication device is configured to transmit a signal indicating presence of the cookware.
Example 22. The cookware of any one of examples 15 to 21, wherein the wireless communication device is configured to transmit a signal indicating a type of the cookware.
Example 23. The cookware of any one of examples 15 to 22, further comprising a temperature sensor, wherein the wireless communication device is configured to transmit a signal indicating a temperature measured by the temperature sensor.
Example 24. The cookware of any one of examples 15 to 23, wherein the cookware is a cookware for induction cooking.
Example 25. A system, comprising a cooking device of any one of examples 1 to 14 and a cookware of any one of examples 15 to 24.
Example 26. A method, comprising:
   wirelessly communicating information from a cookware to a cooking device comprising a cooking plate, and
   processing the information in the cooking device.
Example 27. The method of example 26, wherein processing the information comprises activating the cooking plate of the cookware only if the information indicating presence of cookware on the cooking plate.
Example 28. The method of example 26 or 27, wherein the information indicates a type of cookware, and wherein the processing comprises controlling the cooking plate of the cooking device based on the type of cookware.
Example 29. The method of any one of examples 26 to 28, wherein the information comprises a temperature indication, and wherein the processing comprises to controlling the cooking plate of the cooking device based on the temperature indication.
Example 30. The method of example 29, wherein controlling the cooking plate comprises controlling the cooking plate based on the temperature indication and a given temperature profile.
Example 31. The method of example 29 or 30, wherein controlling the cooking plate comprises deactivating the cooking plate if the temperature indication fulfills a predefined safety condition.
Example 32. The method of example 31, wherein the predefined safety condition comprises one or more of:
   - a temperature being above a predefined temperature threshold for more than a predefined first time period, or
   - a temperature increase above a predefined increase threshold for more than a predefined second time period.
Example 33. The method of any one of examples 26 to 32, wherein the wirelessly communicating is performed in time periods where no power is provided to the cooking plate.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A cooking device (10; 34), comprising:
an induction cooking plate (15), and
a wireless communication device (12; 73) associated with the cooking plate (15) and configured to communicate with cookware (11; 60) provided on the cooking plate (15), wherein the wireless communication device (12; 73) is configured to use an induction coil (37) of the induction cooking plate (15) as an antenna.

2. The cooking device (10; 34) of claim 1, wherein the wireless communication device (12; 73) comprises a near field communication, NFC, device.

3. The cooking device (10; 34) of claim 1 or 2, further comprising a controller (17; 74) configured to control at least one of the wireless communication device (12; 73) and the cooking plate (15).

4. The cooking device (10; 34) of claim 3, wherein the controller (17; 74) is configured to activate the cooking plate (15) only if it receives a signal from the wireless communication device (12; 73) indicating presence of cookware (11; 60) on the cooking plate (15).

5. The cooking device (10; 34) of claim 3 or 4, wherein the wireless communication device (12; 73) is configured to receive a signal indicating a type of cookware (11; 60) from the cookware (11; 60), and wherein the controller (17; 74) is configured to control the cooking plate (15) based on the type of cookware (11; 60).

6. The cooking device (10; 34) of any one of claims 3 to 5, wherein the wireless communication device (12; 73) is configured to receive a temperature indication from the cookware (11; 60), and wherein the controller (17; 74) is configured to control the cooking plate (15) based on the temperature indication.

7. The cooking device (10; 34) of claim 6, wherein the controller (17; 74) is configured to control the cooking plate (15) based on the temperature indication and a given temperature profile.

8. The cooking device (10; 34) of claim 6 or 7, wherein the controller (17; 74) is configured to deactivate the cooking plate (15) if the temperature indication fulfills a predefined safety condition.

9. The cooking device (10; 34) of claim 8, wherein the predefined safety condition comprises one or more of:
- a temperature being above a predefined temperature threshold for more than a predefined first time period, or
- a temperature increase above a predefined increase threshold for more than a predefined second time period.

10. The cooking device (10; 34) of any one of claims 1 to 9, wherein the wireless communication device (12; 73) is configured to communicate in time periods where no power is provided to the cooking plate (15).

11. A cookware (11; 60) for induction cooking, comprising:
a wireless communication device (13; 61; 72) configured to communicate with a cooking device (10; 34), wherein the wireless communication device (13; 61; 72) is configured to be powered by signals received from the cooking device (10; 34) .

12. The cookware (11; 60) of claim 11, wherein the wireless communication device (13; 61; 72) comprises one or more of an radio frequency identification, RFID, tag, or a near field communication, NFC, device.

13. The cookware (11; 60) of claim 11 or 12, wherein the cookware (11; 60) comprises a metal, and wherein the wireless communication device (13; 61; 72) is shielded against the metal by a ferrite material (71).

14. The cookware (11; 60) of any one of claims 11 to 13, wherein the wireless communication device (13; 61; 72) is configured to transmit one or more of a signal indicating presence of the cookware (11; 60) or a signal indicating a type of the cookware (11; 60).

15. The cookware (11; 60) of any one of claims 11 to 14, further comprising a temperature sensor (31), wherein the wireless communication device (13; 61; 72) is configured to transmit a signal indicating a temperature measured by the temperature sensor (31).
